Europäisches Patentamt

(19) European Patent Office

Office européen des brevets

(11) Numéro de publication: **0 082 229**
A1

(12) **DEMANDE DE BREVET EUROPEEN**

(21) Numéro de dépôt: **81420192.7**

(22) Date de dépôt: **23.12.81**

(51) Int. Cl.³: **B 62 M 3/08**

(43) Date de publication de la demande:
**29.06.83 Bulletin 83/26**

(84) Etats contractants désignés:
**BE CH DE FR GB IT LI LU NL SE**

(71) Demandeur: **Millet, Gabriel**
**3, rue Thomas Riboud**
**F-01000 Bourg-en-Bresse(FR)**

(71) Demandeur: **Raschitelli, Michel**
**6 rue des Sycomores**
**F-01000 Bourg-en-Bresse(FR)**

(72) Inventeur: **Millet, Gabriel**
**3, rue Thomas Riboud**
**F-01000 Bourg-en-Bresse(FR)**

(72) Inventeur: **Raschitelli, Michel**
**6 rue des Sycomores**
**F-01000 Bourg-en-Bresse(FR)**

(54) **Dispositif de verrouillage et déverrouillage à commande automatique pour une pédale de vélo de course ou pour tout autre usage industriel ou sportif.**

(57) Trois tétons (24 - 26) ou crampons fixés sous la chaussure (27) du cycliste coopér nt avec des basculeurs (3) d'un corps de pédale (1) pouvant tourner autour d'un axe de pédale (2)

Le courreur se vérouille automatiquement par avance du pied sur la pédale, des encoches (6, 18) étant prévues à cet effet, et se déverrouille automatiquement soit par torsion ou recul du pied.

FIG 2

EP 0 082 229 A1

La présente invention concerne un dispositif de verrouillage à commande automatique pour une pédale de vélo de course .

On sait que les vélos de course sont équipés de moyens permettant de verrouiller chaque pied du coueur sur une pédale , ceci dans le but de toujours assurer un positionnement optimal du pied sur la pédale . Cette fonction a souvent été remplie par un cale-pied et une courroie rapportés sur les traverses d'origine de la pédale, le cale-pied venant coiffer la pointe du pied alors que la courroie de longueur réglable entoure la partie supérieur du pied. Ce système présente divers inconvénients :

- La fixation réalisée manque de rigidité.

- L'adaptation du pied sur la pédale n'est pas rapide , et demande un réglage manuel délicat.

- Le système se dérègle facilement, par exemple lorsque la courroie se détend sous l'effet de la pluie, ou lorsquelle se désserre sous l'effet d'un effort violent.

- La courroie coupe la circulation du sang, et tend a blesser le pied.

- La pédale ne reste pas d'elle même en position d'utilisation, les forces de gravités la rappelant la tête en bas dès qu'elle n'est plus solidaire du coureur.

On connait des dispositif permettant de verrouiller directement la pédale sur la semelle de la chaussure du coureur . Toutefois, ces dispositifs n'ont pas jusqu'ici donné entière satisfaction tant en ce qui concerne la sécurité qu'en ce qui concerne la facilité d'emploi et la rapidité des ppérations de vérouillage du fait de la nécessité d'un actionnement manuel du mécanisme utilisé .

L'invention a pour but de réaliser un dispositif de verrouillage capable d'éviter l'ensemble des inconvénients précités, et permettant une commande automatique des ppérationsde verrouillage et de déverrouillage sans aucune intervention manuelle.

Un dispositif de verrouillage suivant l'invention , pour fixer une semelle de chaussure sur une pédale de velo de course comportant un corps de pédale monté pour tourner autours d'un arbre solidaire de l'extrémité d'une manivelle de pédalier, est caractérisé en ce qu'il comprend :

- deux basculeurs qui sont placés côte à côte et qui s'étendent plus ou moins parrallèlement au grand axe du vélo pour pivoter sur un même axe sensiblement vertical du corps de pédale lorsque la pédale est en position d'utilisation .

-des protubérances fixées à demeure sous la semelle de la chaussure, et susceptible de s'engager entre les bords situés en regard des
deux basculeurs.

- un coulisseau monté pour coulisser parallèlement au grand axe
du basculeur, et susceptible d'être repoussé vers l'avant par lesdites
protubérances;

- deux biellettes articulées chacune entre l'avant du coulisseau
et l'avant de l'un des basculeurs pour écarter l'une de l'autre les
extrémités avant des basculeurs lorsque le coulisseau se déplace vers
l'avant .

Suivant une caractéristique supplémentaire de l'invention, les
deux basculeurs pivotent sur le corps de la pédale par l'intermédiaire
de duex sectuers d'arbre engagés à l'intérieur du même palier, ce dernier (
étnat solidaire du corps de pédale alors que chaque basculeur est solidaire de l'un des deux secteurd'arbre .

Suivant une caractéristique supplémentaires de l'invention, un
ressort hélicoïdal est logé à la partie inférieure du corps de pédale,
dans un trou sensiblement parallèle au grand axe des basculeurs, ce
ressort mettant en permanence un poussoir en appui radial contre les sectuers d'arbre qui présentent chacun, au niveau du trou précité du corps
de pédale, un méplat orienté de façon au l'appui du poussoir tende à rappeler les basculeurs en position de verroiullage ou en position de déverrouillage .

Suivant une caractéristique supplémentaire de l'invetion, le coulisseau comporte suivant son axe médiant une lumière allongée dans le sens
longitudinal a l'intérieur de laquelle sont engagées les deux secteurs
d'arbre , le coulissement de ces deux secteurs le long de la lumière
assurant le guidage du coulisseau .

Suivant une caractéristique supplémentaire de l'invention, les pro
tubérances fixée  sous la semelle concistent en trois tetons , a savoir
un téton avant destiné a buter.contre l'extrémité arrière du coulisseau
et à venir s'engager simultanément dans deux échancrures prévues sur les
bords en regard des basculeurs , ainsi que deux tétons arrières destinés chauun à venir s'engager dans une échancrure arrière du bord du
basculeur correspondant, chaque tétons étant pourvu d'une tête destinée
à butter contre la face inférieure des basculeurs.

Suivant une variante de l'invention, les protubérances fixées sous la semelle et concistant en trois tétons appartenant à une seule et même pièce de forme rapportée sous la semelle, le dessin formé par les bords de cette pièce de forme reproduisant exactement celui des parties actives des tétons.

Suivant une caractéristique supplémentaire de l'invention, la mise en butée des deux sectuers d'arbre des basculeurs aux extrémités opposées de la lumière du coulisseau définit les deux positions suivantes :

– une position de deverrouillage , suivant laquelle le coulisseau est en fin de course arrière tandis que les biellettes forment entre elles , vers l'avant, un angle obtus;

– une position de verrouillage , suivant laquelle le coulisseau est en fin de course avant, tandis que les biellettes forment entre elles, vers l'avant, un angle très légèrement supérieur à 180 °, une torsion du du pied suffisant à porter le mécanisme en position de déverrouillage .

Suivant une caractéristique supplémentaire de l'invention, la péda le est conçue de façon que son centre de gravité soit situé au dessous de l'axe de rotation de cette pédale lorsqu'elle est en position d'utilisation,

Le dessin annexé, donné à titre d'exemple non limitatif, permettra de mieux comprendre les caractéristiques de l'invention.

– figure I est une vue en perspective d'une pédale équipée du dispositif suivant l'invention.

– figure 2 est une vue  en perspective de la chaussure utilisable avec cette pédale.

– figure 3 est une vue de dessus de la pédale verrouillée.

– figure 4 est une vue suivant IV (fig.3)

– figure 5 est une vue de dessus de la pédale déverrouillée.

– figure 6 est une vue suivant VI (fig.5)

– figure 7 est une section VII – (fig.6)

– figure 8 est une section VIII – (fig.7)

– figure 9 est une section IX la pédale étant dans la posi- tion déverrouillée.

– figure IO est une section X – correspondant à la figure 9, mais avec la pédale en position verrouillée.

– figure II est une vue de dessus du coulisseau seul.

– figure I2 est une vue de dessous d'une chaussure équipée suivant une variante de l'invention.

- figure I3 est une vue en perspective de la pièce de forme 5 rapportée sous cette chaussure.

- figure I4 le plateau de pédale vue de dessus sans le corps de pédale, les coins avec galets.

- figure I5 le plateau de pédale vu de côté

- figure I6 le galet arrière vu de déssus

- figure I7 le galet arrière vu de côté

- figure I8 le galet arrière vu en coupe

- figure I9 la coupe de l'axe du plateau de pédale à hauteur du piston.

- figure 20 les coins en position déverrouillée vus de dessus sans le plateau de pédale.

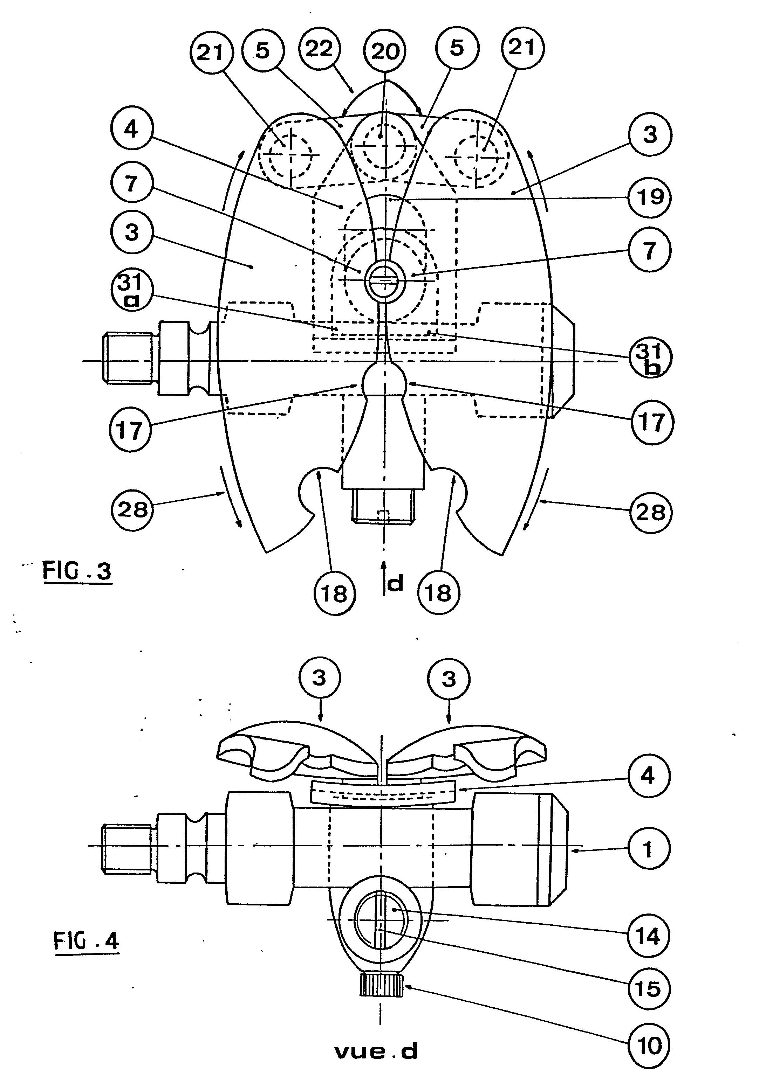

- figure 2I les coins en position verrouillés ou position d'attente.

- figure 22 - bague de roulement vue de côté

- figure 23 - bague de roulement vue de dessus

- figure 24 - coins vus de côté

- figure 25 - ressort de rappel des coins

- figure 26 - la pédale vue de dessus sans les galets

- figure 27 - la pédale vue de côté sans les galets

- figure 28 - l'ensemble des galets vu de dessus

- figure 29 - le galet avant vu de côté

- figure 30 - le galet avant vu en coupe

- figure 3I - le galet arrière vu de côté

- figure 32 - le galet arrière vu en coupe

- figure 33 - la plaque de chaussure vue de dessous

- figure 34 - la plaque de chaussure vue de côté

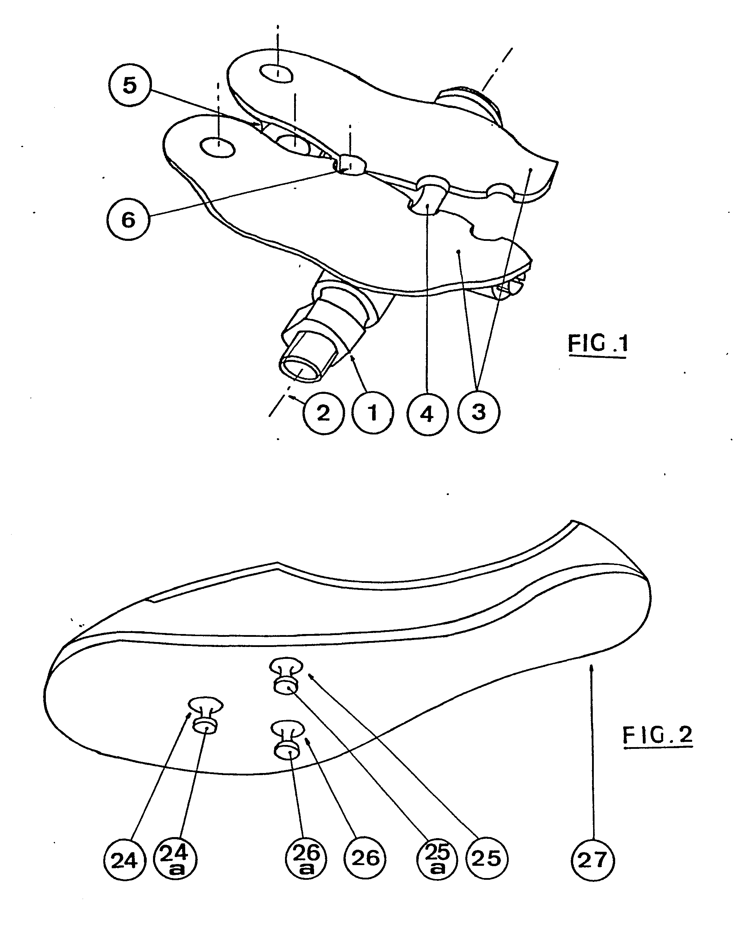

On a représenté sur les figure 1, 3, et suivantes , une pédale de vélo de course équipé d'un dispositif de verrouillage suivant l'inven-sion.

La pédale comprend d'une façon classique un corps de pédale 1 monté pour tourné suivant un axe 2 autours d'un arbre solidaire de l'extémité d'uné manivelle de pédalier. Sur la pédale, le dispositif suivant l'invention comprend essentiellement deux basculeurs 3, un coulisseau 4 et deux biellettes 5.

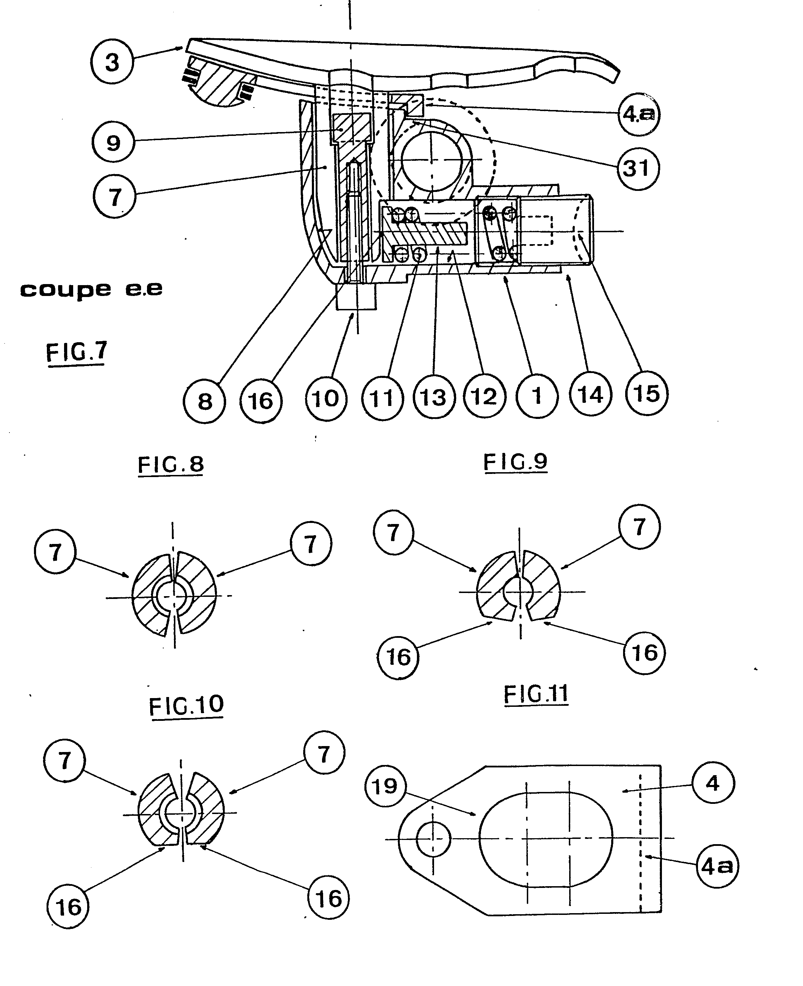

La pédale étant observée dans sa position d'utilisation, les deux basculeurs 3 sont placés côte à côte, et ils s'étendent plus ou moins parallèlement au grand axe du vélo pour pivoter sur un même axe sensiblement vertical 6. Les deux basculeurs 3 pivotent en fait sur le corps de pédale 1 par l'intermédiaire de deux secteurs d'arbre 7 (figures 7 et 8) engagés à l'intérieur du même palier 8 solidaires du corps de pédale, chaque basculeur étant solidaire de l'un des secteurs d'arbre. Ces secteurs qui sont creux, s'étendent de part et d'autre d'une douille de fixation 9 une vis axiale 10 rattache à la base du corps 1.

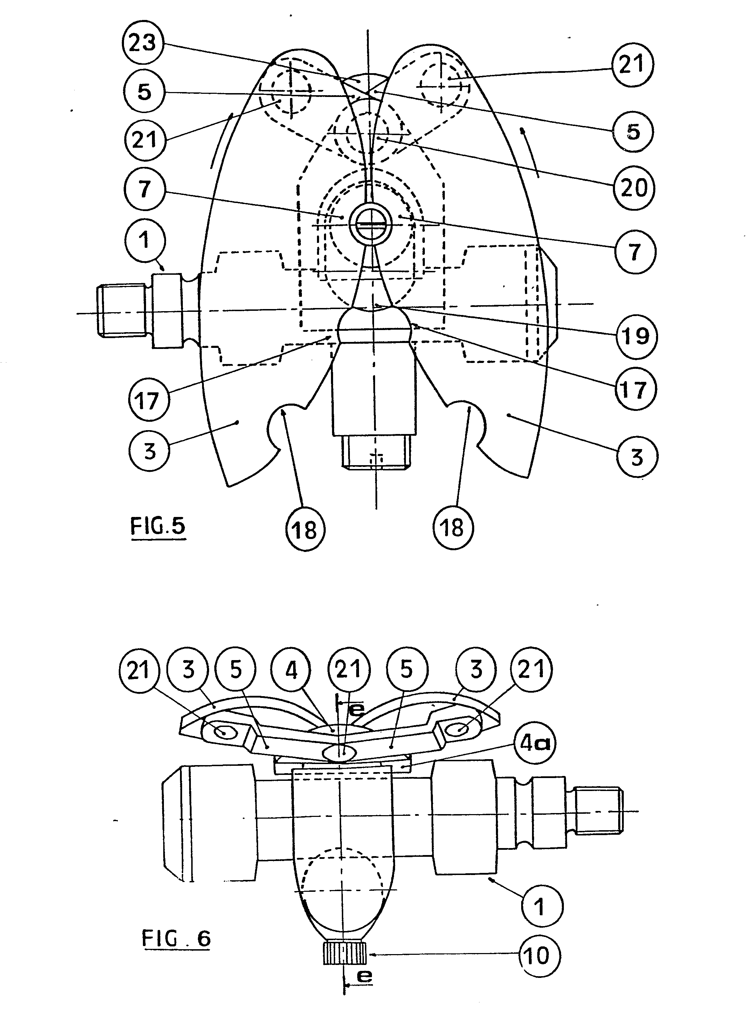

- Un ressort hélicoidal 11, logé à la partie inférieure du corps 1 dans un trou 12 sensiblement parallèle auxgrands axes des basculeurs et comprimé entre un poussoir 13 en appui radial contre l'arrière des secteurs d'arbre 7, et un bouchon 14 vissé dans l'extrémité arrière du trou 12. Pour la faciliter des réglages, le bouchon 14 présente une large forme diamètrale arrière 15 dans laquelle on peut engager une pièce de monnaie utilisable à la manière d'un tournevis. Chaque secteur d'arbre 7 présente, au niveau du trou 12, un méplat 16 orienté de façon que l'appui du poussoir 13 tende à rappeler les basculeurs en position de verrouillage, qui est celle de la figure 3, ou en position de déverrouillage (figure 5).

Les basculeurs 3 comportent, dans leur moitié arrière, et sur leurs bords latéraux en regard, une échancrure avant 17 et une échancrure arrière 18.

Le coulisseau 4 est monté pour coulisser de façon sensiblement parrallèle aux grands axes des basculeurs. Pour cela, il comporte sui-vant son axe médian une lumière allongée 19 (fig. 3, 5, et11). à l'intérieur de laquelle sont engagés les deux secteurs d'arbre 7.

Chaque biellette 5 est articulée entre un pivot 20 solidaire de l'avant du basculeur, et des pivots 21 solidaires de l'avant des basculeurs respectifs.

La mise en butée des deux secteurs d'arbre 7 aux extrémités opposées de la lumière 19 du coulisseau,définit les deux positions suivantes :

- Une position de déverrouillage (fig.5), suivant laquelle le coulisseau 4 est en fin de course arrière tandis que les biellettes 5 forment entre elles, vers l'avant, une angle aigu 22.

- Une position de verrouillage (fig.3), suivant laquelle le coulisseau 4 est en fin de course avant tandis que les biellettes forment entre elles, vers l'avant, un angle 23 très légèrement supérieur à 180°.

La pédale dans son ensemble est conçue de façon que son centre de gravité soit situé au dessous de l'axe de rotation 2 de cette pédale lorsqu'elle est en position d'utilisation. La pédale tend donc d'elle-même à rester dans cette position.

Sur la chaussure, le dispositif suivant l'invention prévoit trois tétons 24, 25, et 26, à savoir un téton avant et deux tétons arrière fixés sous la semelle 27 et pourvus de têtes 24a, 25a et 26a.

Le fonctionnement est le suivant :

La pédale étant au départ en position déverrouillée, le coureur met la chaussure en place en faisant glisser son pied vers l'avant sur la pédale. Au cours de ce mouvement, le téton avant 24 vient buter contre l'extrémité arrière du coulisseau 4, pour repousser ce dernier vers l'avant, ce qui a pour conséquence de faire pivoter les basculeurs dans le sens du rapprochement relatif de leurs extrémités arrières (flèches 28, figure 3). Le téton 24 vient alors s'engager à l'intérieur des échancrures avant 17, tandis que les tétons 25 et 26 s'engagent chacun en partie dans une échancrure arrière 18, la tête de chaque téton butant contre la face inférieure des basculeurs. On note que, pour atteindre cette position, il faut dépasser la position de point mort selon laquelle les pivots 20 et 21 sont alignés, ce qui contribue à l'efficacité du verrouillage obtenu.

Pour effectuer le déverrouillage, il suffit d'effectuer un effort de torsion latérale du pied, dans un sens ou dans l'autre, de façon à faire pivoter autour de l'axe vertical 6,l'ensemble comprenant les deux basculeurs 3 et le coulisseau 4. Au cours de ce mouvement de pivotement, un talon 4a prévu sous l'extrémité arrière du coulisseau vient prendre appui progressivement contre l'arrière d'une butée transversale 31 du corps 1. Cet appui qui, suivant le sens de la torsion imprimée au pied à lieu sur l'un des deux points 31a et 31b de la butée (voir figure 3), provoque le recul du coulisseau 4, la butée 31 agissant ainsi à la manière d'un levier. Lorsque le mécanisme articulé à dépassé la position de point mort qui correspond à l'alignement des pivots 20 et 21, le ressort 11 intervient par l'intérmédiaire du poussoir 13 pour ramener complètement les basculeurs à la position déverrouillée, libérer le pied et ramener les basculeurs dans l'axe.

On remarque le ressort 11 assure à lui seul quatre fonctions différentes :

- Il maintient le verrouillage (fig.10).

- Il maintient, quoique plus faiblement, la position de déverrouillage (fig.9).

- Il assure le maintien du pied dans la position correcte choisie.

- Il sert à engendrer le "point dur" qu'il faut surmonter pour parvenir au déverrouillage, et qui éviter tout déverrouillage intempestif.

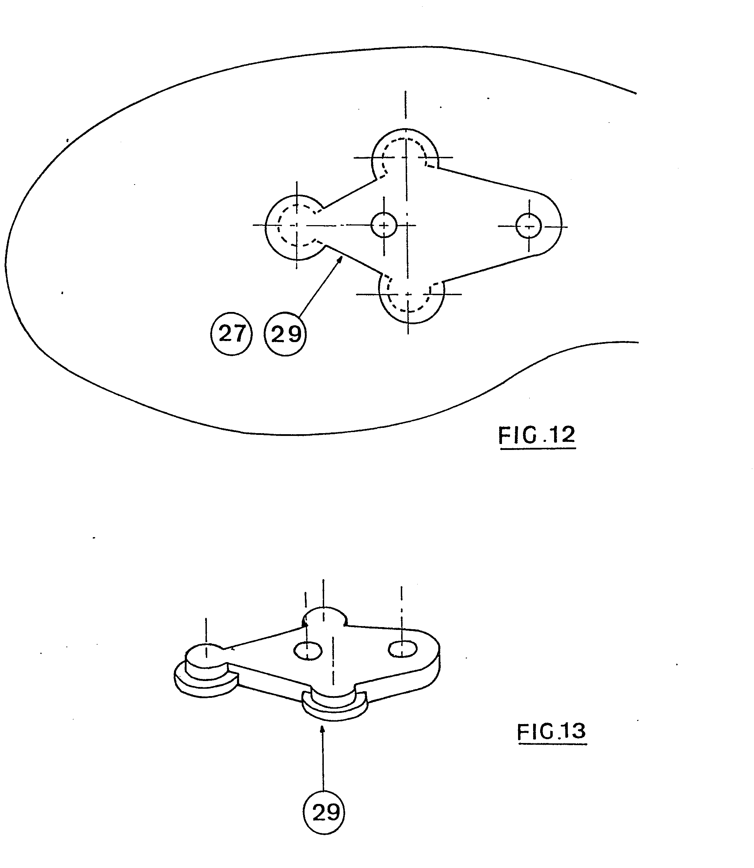

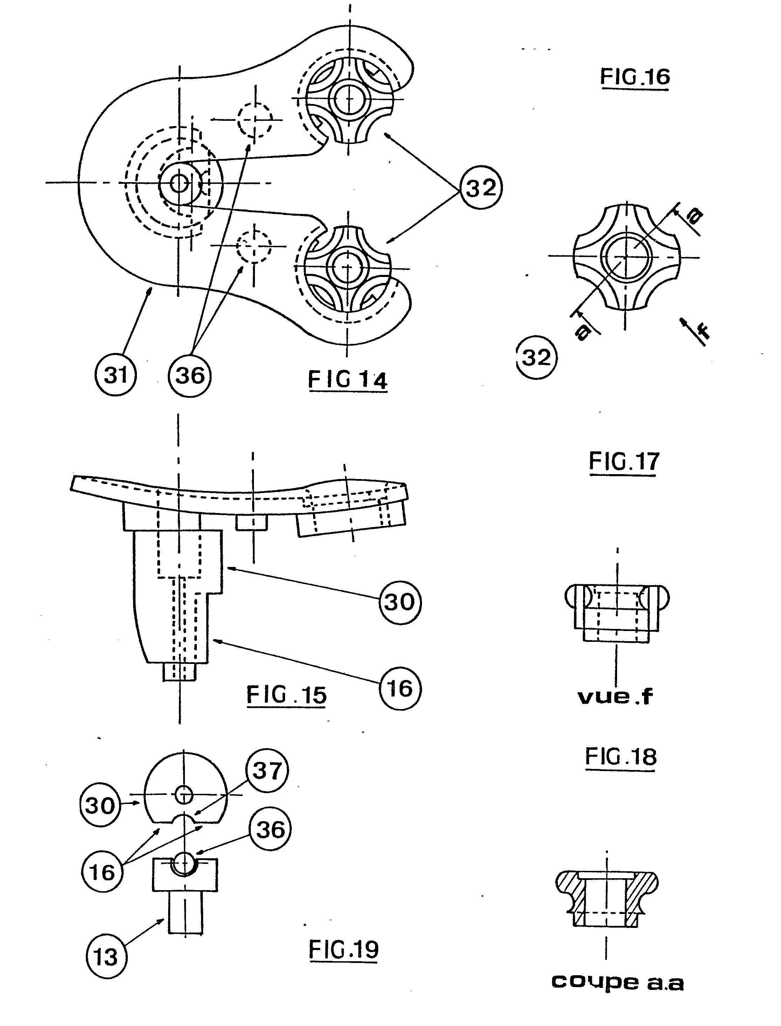

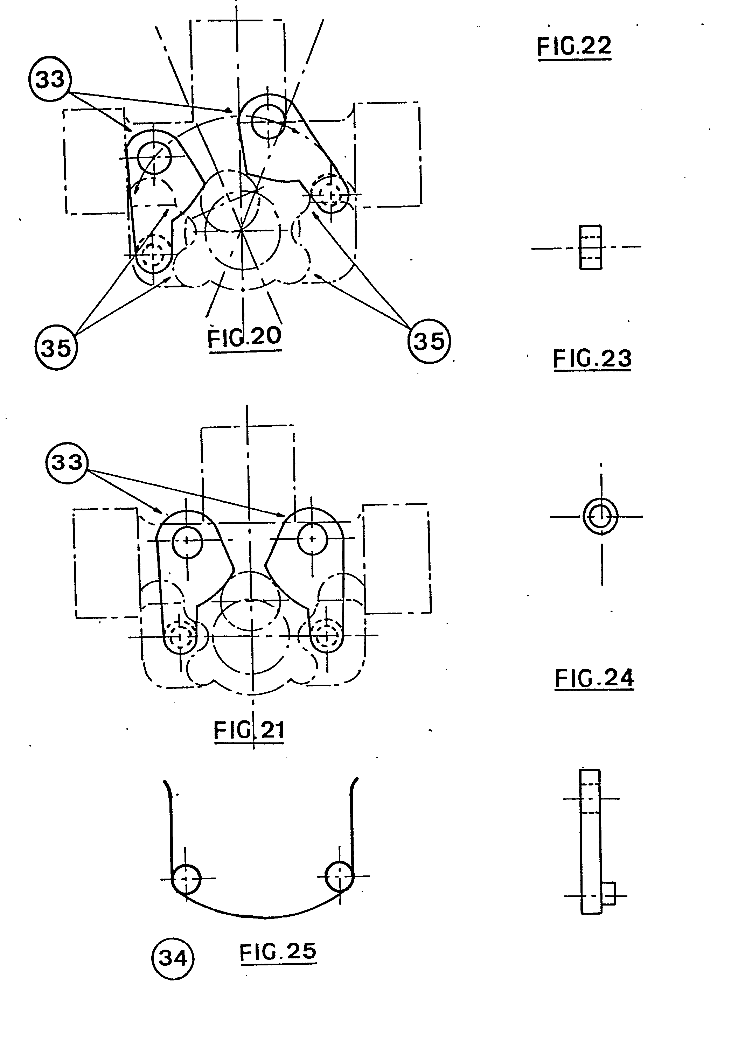

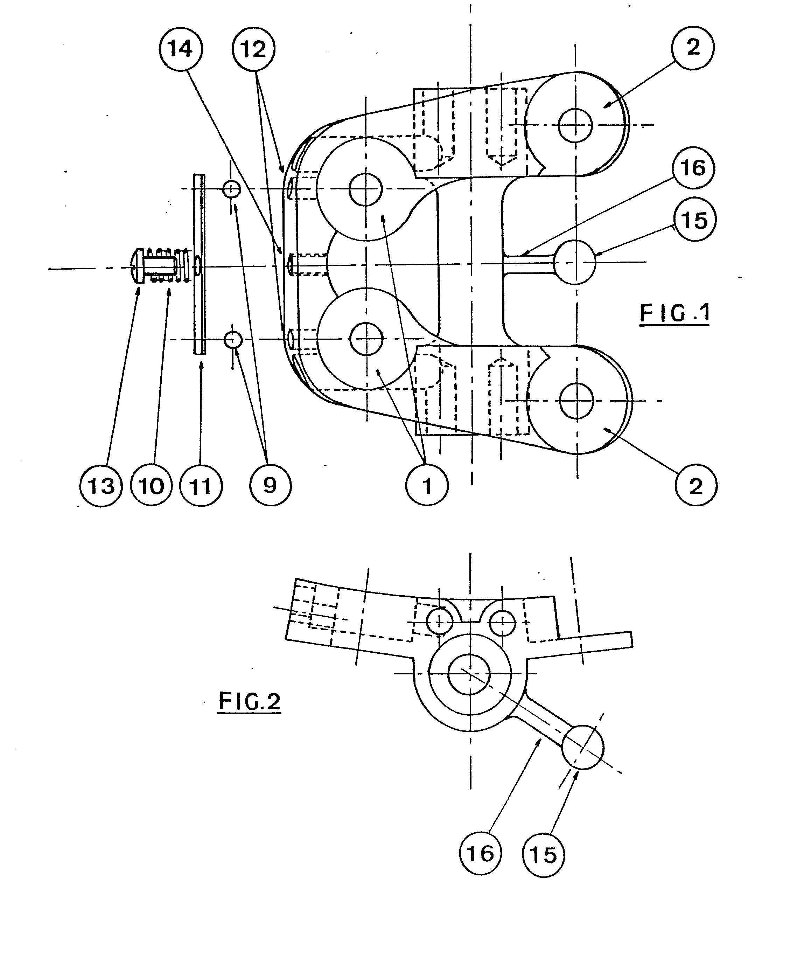

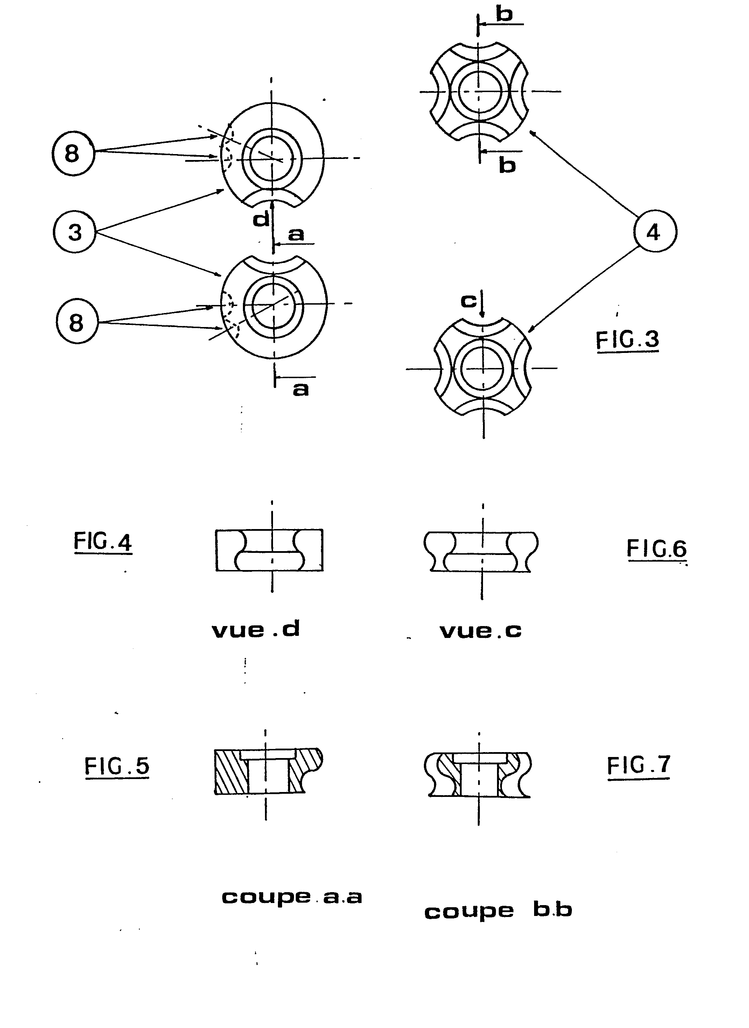

Suivant une variante illustrée sur les figures 12 et 13, on remplace les tétons 24, 25, 26 par une seule et même pièce de forme 29 rapportée sous la semelle. Le dessin formé par les bords de cette pièce de forme reproduisent exactement eelui des parties actives des tétons 24 à 26, et le fonctionnement reste le même.

Le dispositif suivant l'invention présente notamment les avantages suivants :

- Il supprime totalement l'usage de la courroie et du câle-pied, qui présentent les inconvénients déjà signalés plus haut.

- On l'actionne par de simples mouvements du pied, sans l'aide des mains. Le coureur peut ainsi verrouiller et déverrouiller ses pieds par simple torsion dans un sens ou dans l'autre sans devoir se baisser. Ce mode de fonctionnement est notamment avantageux vis à vis de la sécurité : le déverrouillage peut être instantané lorsqu'il le faut, par exemple en cas de chute.

- La pédale reste toujours d'elle-même en position d'utilisation, par effet de gravité.

- Les efforts de rappel sont réglables : il suffit pour les régler d'agir sur le ressort 11 en visant plus ou moins le bouchon 14.

0082229

REVENDICATIONS

I) Dispositif de verrouillage pour fixer une semelle de chaussure sur une pédale de vélo de course comportant un corps de pédale monté pour tourner autour d'un arbre solidaire de l'extrémité d'une manivelle de pédalier caractérisé en ce que les protubérances fixées sous la semelle consistent en trois tétons placés en triangle (fig.2) ou supportés par une plaque (fig.I3) (N°29) fixée sous la chaussure (fig I2) viennent se verrouiller sur le corps de pédale par un glissement de la chaussure, d'arrière en avant, dans un mouvement naturel sans action manuelle et peut se déverrouiller volontairement soit par une torsion de droite ou de gauche (fig. 3-5-20-2I) ou par une action d'avant en arrière (fig.26) ou par un choc sur l'avant de la chaussure sans action manuelle.

2) Dispositif suivant la revendication I caractérisé en ce qu'il comprend :

- deux basculeurs (fig.5) (N°3) qui sont placés côte à côte et qui s'étendent plus ou moins parallèlement au grand axe du vélo pour pivoter sur un même axe sensiblement vertical du corps de pédale lorsque la pédale est en position d'utilisation.

- des protubérances (fig. 2) (N° 24-25-26-29) fixées à demeure sous la semelle de la chaussure et susceptibles de s'engager entre les bords latéraux en regard des basculeurs.

- un coulisseau (fig.II) monté pour coulisser parallèlement au grand axe du basculeur et susceptible d'être repoussé vers l'avant par lesdites protubérances.

- Deux biellettes (N°5) articulées chacune entre l'avant du coulisseau et l'avant de l'un des basculeurs pour écarter l'une de l'autre les extrémités avant des basculeurs lorsque le coulisseau se déplace vers l'avant.

Dispositif caractérisé en ce que les deux basculeurs pivotent sur le corps par l'intermédiaire de deux secteurs d'arbre engagés à l'intérieur du même pallier solidaire du corps de pédale, alors que chaque basculeur est solidaire de l'un des secteurs d'arbre.

3) Dispositif suivant la revendication I et 2 caractérisé en ce qu'un ressort hélicoïdal (fig.7) (N°II) est logé à la partie inférieure du corps de pédale (Fig.7) (N°I) dans un trou sensiblement parallèle au grand axe des basculeurs, ce ressort mettant en permanence un poussoir (fig.7) (N°I5) en appui radial contre les secteurs d'arbre (fig. 8) (N°7) qui présentent chacun au niveau du trou précité du corps de pédale un méplat (fig.I0) (N°I6) orienté de façon que l'appui du poussoir tende à rappeler les basculeurs en position de verrouillage (fig.3) et en position de déverrouillage (fig.5).

4) Dispositif suivant la revendication 3 et I caractérisé en ce qui concerne le coulisseau (fiG.II) (N° 4) comporte suivant son axe médiant une lumière allongée (fig.II) (N°I9) le sens longitudinal à l'intérieur de laquelle sont engagés les deux secteurs d'arbre, le coulissement de ces secteurs le long de la lumière assurant le guidage du coulisseau.

5) Dispositif suivant la revendication 4 et I, caractérisée en ce que la mise en butée des deux secteurs d'arbre des basculeurs aux extrémités opposées de la lumière du coulisseau définit les deux positions suivantes :

- une position de déverrouillage, suivant laquelle le coulisseau est en fin de course arrière tandis que les biellettes forment entre elles, vers l'avant, un angle obtu,

- une position de verrouillage, suivant laquelle le coulisseau étant en fin de course avant, les biellettes forment entre elles, vers l'avant, un angle très légèrement supérieur à I80°, tandis qu'un talon (fig.II) (N° 4A) prévu sous l'extrémité arrière du coulisseau est situé à proximité d'une butée transversale du corps (fig.3) (N° 3I A - 3I B) une torsion du pied dans un sens ou dans l'autre provoquant le pivotement de l'ensemble qui comprend les deux basculeurs et le coulisseau, l'appui progressif du talon, du coulisseau, contre l'arrière de la butée transversale du corps de pédale, puis le recul du coulisseau au-delà de la position de point mort correspondant à l'alignement des biellettes, le ressort agissant finalement par l'intermédiaire du poussoir pour ramener les basculeurs dans l'axe et en position de déverrouillage, à savoir un téton avant destiné à buter contre l'extrémité arrière du coulisseau et à venir s'engager simultanément dans deux échancrures avant (fig.3) (N° I7) prévues sur les bords en regard des basculeurs

ainsi que deux tétons arrières destinés chacun à venir s'engager dans une échancrure arrière (fig.3) N° I8) du bord du basculeur correspondant, les têtes des tétons butant contre la face inférieure des basculeurs.

6) Dispositif suivant l'une quelconque des revendications I et 5 caractérisé en ce que la pédale est conçue de façon que son centre de gravité soit situé au dessous de l'axe de rotation de cette pédale lorsqu'elle est en position d'utilisation, la pédale tendant ainsi d'elle même à rester dans cette position ou par un contrepoids (fig.27) (N° I5 et I6)

7) Dispositif suivant la revendication I et 6, la présente variante se compose d'un téton (24) avant écartant les deux coins (fig. 2I) (N°33) qui agissant sur le ressort (fig.25) (N°34) plus faible et réglable en force, les coins se referment et forment un blocage progressif sous l'effet du ressort (34) de rappel.

Ce verrouillage n'est pas intégral, il dépend de la force du ressort (34) et du rapprochement des deux points (36) de fixation des coins.

Le déverrouillage intervient sous un choc violent à l'avant de la chaussure ou par une torsion de gauche ou de droite de l'axe de la pédale de I0° à 20° les deux coins (33) s'écartant sous l'effet des bossages (fig20) (N°35) libérant le téton (24) de la chaussure.

8) Dispositif suivant la revendication I et 7, les galets (32) mobiles fixés sur l'arrière du plateau de pédale sont creusés de quatre encoches pour recevoir ou bloquer latéralement des deux tétons (25) et (26) à l'avance de la chaussure. Ce système est prévu pour diminuer l'usure et obtenir un blocage progressif.

9) Dispositif suivant la revendication I et 8 afin d'augmenter le point fixe c'est à dire l'axe de la chaussure par rapport à l'axe du vélo. Un galet (fig.I4) (N°36) fou, logé dans le piston vient s'encastrer dans un logement (37) prévu sur l'arbre (30).

I0) Dispositif suivant la revendication I et 9 - la présente variante se compose d'un corps de pédale monté pour tourner autour d'un arbre solidaire de l'extrémité d'une manivelle de pédalier suivant les procédés connus, surmonté d'un plateau en forme de fer à cheval (fig. I4) N° 3I) creusé de quatre alvéoles (fig.26) (N°I et 2).

11

0082229

Le projet présente l'avantage de se verrouiller facilement par le glissement de la chaussure du coureur d'arrière en avant, la pression sur les billes (fig.26) (N° 9) de verrouillage pouvant se régler à volonté par la vis de réglage (fig.26) (N° I3)

Le dispositif suivant la revendication I, le déverrouillage s'effectue par une force volontaire exercée d'avant en arrière, ce qui ne nuit en rien pendant le pédalage, ces forces étant utilisées verticalement ou latéralement.

Que la pente entre les deux trous (fig.28) (N°8) du même galet (3) est progressive rendant le verrouillage plus doux que le déverrouillage.

II) Dispositif suivant revendication I et IO de deux galets à l'avant (fig.28) (N°3) logés dans les alvéoles (fig.26) (N° I) solidaires du plateau et pivotant sur un axe de fixation, ces galets sont entaillés face à face pour recevoir le téton (fig. 2) (N° 24), deux trous (fig. 28) (N° 8) sur l'avant dans l'axe parallèlement au vélo sont aménagés pour recevoir une bille (fig.26) (N° 9) qui contrôle sous la poussée du ressort (fig.26) (N° IO) la rotation des galets.

De deux galets arrières (fig.28) (N°4) logés dans les alvéoles (fig.26) (N°2) solidaires du plateau et pivotant sur un axe de fixation, ces galets sont entaillés sur leurs quatre faces pour recevoir les tétons (fig.2) (N°25 et 26)

D'un bras (fig.26) (N°II) situé à l'avant du plateau maintenant les deux billes (fig.26) (N° 9) dans leur logement (fig.26) (N°I2) sous l'effet du ressort (fig.26) (N°IO) et d'une vis (fig.26) (N°I3) vissée à l'avant du plateau (fig.26) (N°I4)

Les deux galets (fig.28) (N°3) étant en position déverrouillée, environ 30° d'ouverture, le coureur glisse sa chaussure sur le plateau de pédale dans un mouvement d'arrière en avant, le téton avant (fig.2) (N°24) s'encastre dans les deux galets(fig. N°3) et les oblige à pivoter jusqu'à l'axe de œux-ci et la bille (fig.26) (N° 9) ainsi par une pente plus douce passe dans le trou (fig.28) (N° 8) dit le "trou de blocage) la dureté de la bille pouvant se régler par la vis (fig.26) (N° I3.)

FIG .1

FIG. 2

⑤ ⑥ ② ① ④ ③

㉔ ㉔a ㉖a ㉖ ㉕a ㉕ ㉗

0082229

FIG . 3

FIG . 4

vue . d

0082229

PL .3/9

FIG.5

FIG . 6

PL.4/9

coupe e.e

FIG.7

FIG.8

FIG.9

FIG.10

FIG.11

PL.5/9

FIG.12

FIG.13

FIG.16

FIG 14

FIG.17

vue.f

FIG.18

FIG .15

FIG.19

coupe a.a

0082229

PL.7/9

**FIG.22**

(33)

(35)     FIG.20     (35)

**FIG.23**

(33)

FIG 21

**FIG.24**

(34)     FIG.25

PL 8/9 0082229

FIG.1

FIG.2

FIG.3

FIG.4

vue.d

FIG.6

vue.c

FIG.5

coupe.a.a

FIG.7

coupe b.b

## RAPPORT DE RECHERCHE EUROPEENNE

Office européen
des brevets

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 192 525 (HEISE) *Figures 1-5; page 2, lignes 23-38* | 1-2 | B 62 M 3/08B |
| A | FR-A-2 432 427 (RIGHEZZA) *Figures 1-4; page 2, ligne 26 - page 3, ligne 30* | 1 | |
| A | WO-A-8 001 056 (BADERSBACH) | | |
| A | FR-A-2 279 607 (GORMAND) | | |
| A | FR-A-2 310 914 (GENZLING) | | |

DOMAINES TECHNIQUES RECHERCHES (Int. Cl ³)

B 62 M

Le présent rapport de recherche a été établi pour toutes les revendications

| Lieu de la recherche LA HAYE | Date d'achèvement de la recherche 09-08-1982 | Examinateur GEMMELL R.I.D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82